**Europäisches Patentamt**

**European Patent Office**

**Office européen des brevets**

(19)

(11) Veröffentlichungsnummer : **0 251 029 B1**

(12)

# EUROPÄISCHE PATENTSCHRIFT

(45) Veröffentlichungstag der Patentschrift :
16.10.91 Patentblatt 91/42

(51) Int. Cl.⁵ : **H02K 15/04, H02K 3/04**

(21) Anmeldenummer : **87108684.9**

(22) Anmeldetag : **16.06.87**

(54) **Verfahren zum Herstellen eines flachen Spulenbandes.**

(30) Priorität : 24.06.86 DE 3621095

(43) Veröffentlichungstag der Anmeldung :
07.01.88 Patentblatt 88/01

(45) Bekanntmachung des Hinweises auf die
Patenterteilung :
16.10.91 Patentblatt 91/42

(84) Benannte Vertragsstaaten :
AT BE CH DE ES FR GB GR IT LI LU NL SE

(56) Entgegenhaltungen :
CH-A- 486 150
CH-A- 547 569
CH-A- 558 102

(56) Entgegenhaltungen :
GB-A- 1 436 543
GB-A- 2 152 766
US-A- 2 151 034
US-A- 3 464 106

(73) Patentinhaber : Deutsche Thomson-Brandt
GmbH
Hermann-Schwer-Strasse 3 Postfach 1307
W-7730 Villingen-Schwenningen (DE)

(72) Erfinder : Schandl, Hartmut, Dipl.-Ing.
Egerstrasse 2
W-7730 Villingen-Schwenningen (DE)

(74) Vertreter : Einsel, Robert, Dipl.-Ing.
Deutsche Thomson-Brandt GmbH Patent- und
Lizenzabteilung Göttinger Chaussee 76
W-3000 Hannover 91 (DE)

**Beschreibung**

Die Erfindung betrifft ein Verfahren zum Herstellen eines flachen Spulenbandes aus isoliertem Draht, bei dem nebeneinanderliegende Windungen in teilweiser Überdeckung mit benachbarten Windungen angeordnet sind.

Ein solches Verfahren ist aus der DE-PS 18 01 263 bereit bekannt. Bei diesem bekannten Verfahren werden die endlichen Windungen eines Drahtes zu einer annähernd vierseitigen prismatischen Spule gewickelt. Sodann wird in einem Arbeitseingang unter antiparalleler Verschiebung gegenüberliegender Spulenteile, die in einer Vorrichtung durch Klemmung festgehalten werden, ein flaches Spulenband geformt. Dieses wird in eine geschlossene Hohlzylinderform gebogen und in dieser Lage verfestigt.

Aus dem Dokument GB-A- 1436543 ist eine Wickelvorrichtung bekannt, bei der die einzelnen Windungen für eine Spule auf einen aus 3 Schichten bestehenden Wickelkörper nebeneinander, einlagig aufgewickelt werden. Durch Verschieben der äußeren Schichten des Wickelkörpers in zueinander entgegengesetzter Richtung gegenüber der mittleren, feststehenden Schicht, wird eine rautenförmige, flache Spule erzeugt.

Ferner ist aus dem Dokument US-A-2151034 die Herstellung rautenförmiger flacher Spulen bekannt, bei der die einzelnen Windungen auf eine kammartige Vorrichtung aufgewickelt werden. Durch Verschieben der Kämme gegeneinander gegenüber äußeren feststehenden Kämmen wird die flache Rautenform durch Drehung der Spule erreicht.

Es ist Aufgabe der Erfindung, ein neuartiges Verfahren für die Herstellung eines flachen Spulenbandes aufzuzeigen, welches als Endlosband herstellbar ist und außerdem die Möglichkeit bietet, das flache Spulenband kreisringförmig auszubilden.

Diese Aufgabe wird gemäß der Erfindung durch ein Verfahren mit den im Anspruch 1 aufgezeigten Merkmalen gelöst. Vorteilhafte Weiterbildungen sind in den Unteransprüchen beschrieben.

Die Erfindung betrifft ferner eine Vorrichtung zum Durchführen des Verfahrens.

Im Prinzip werden am Anfang eines bandförmigen Trägers einer Vorrichtung die einzelnen Drahtwindungen mit Hilfe eines Wikkelkopfes in gestreckten Windungen aufgebracht, wobei bei geringem Drahtdurchmesser auch mehrere Windungen übereinander oder auch parallel gewickelt werden können. Die Windungen haben die umhüllende Form des bandförmigen Trägers, nämlich eine geringe und eine größere Breite, wobei die geringere Breite des Trägers bikonkav, bikonvex oder mit geraden Seitenteilen ausgeführt sein kann, während die größere Breite im Wickelbereich etwa parallel zueinander verlaufende Seiten aufweist.

Aus der Wickelzone werden die einzelnen Windungen kontinuierlich oder auch periodisch durch Transportmittel in eine zweite Zone des Trägere weitergeschoben, die bei etwa Beibehaltung der geringeren Breite eine symmetrisch abnehmende größere Breite aufweist, wobei diese abnehmende größere Breite kontinuierlich oder auch nach vorgegebenen Kurvenformen erfolgen kann.

Während des Transportes in dieser zweiten Zone werden die Windungen durch Einwirkung z.B. von Reibrädern mit unterschiedlichen Umfangsgeschwindigkeiten und unterschiedlichen Reibmomenten bei Beibehaltung oder geringer Veränderung der geringeren Breite des Trägers etwa in Rautenform über dem Träger auseinandergezogen. Hat der Träger in dieser zweiten Zone eine gestreckte Form, wird auch ein gestrecktes Spulenband geformt. Weist der Träger aber in dieser zweiten Zone Kurvenform auf, wobei diese Kurve räumlich auch als Spirale ausgebildet sein kann, wird ein Spulenband mit Kreischarakter geformt.

In einer dritten Zone des Trägers, deren Form an die zweite Zone angepaßt sein muß, und etwa parallelen Verlauf der Seitenteile der größeren Breite aufweist, wird das Spulenband während des Verschiebens verschiedenen Arbeitsgängen unterworfen. So kann in dieser Zone das Spulenband gepreßt, verfestigt und zugeschnitten werden.

Während des Wickelvorganges in der ersten Zone können Anzapfungen innerhalb des Spulenbandes durch besondere Ausbildung einer Windung erreicht werden. Hierzu muß eine Windung mit einer gegenüber den anderen Windungen größerem Umfang gewickelt werden. Dies ist durch zusätzliche Vorrichtungen erreichbar, die während des Wicklungsvorganges in Funktion treten. Durch ein Verdrillen einer Schlaufe der größeren Windung zu einem Anschlußdraht wird diese Windung auf den Umfang der anderen Windungen wieder zurückgeführt.

Auch besteht die Möglichkeit, den Wickelkopf so zu steuern, daß zwischen zwei Anzapfungen der Wickelsinn umgekehrt wird oder daß nach einer vorgegebenen Anzahl von Windungen durch Verminderung der Wickeldrehzahl eine Zone mit wenigen Windungen erzeugt wird. In dieser Zone kann z.B. eine Trennung des Spulenbandes erfolgen.

Eine vorteihafte Weiterbildung der Erfindung besteht darin, daß in beide Schmalseiten des Trägers Nuten eingebracht sind, in denen ein aus thermoplastischem Kunststoff bestehender Führungsdraht eingelegt ist. Dieser Kunststoffdraht wird zusammen mit dem Windungen, die an ihrem Umkehrpunkt auf diesem Draht aufliegen, über den Träger der Vorrichtung weitertransportiert. Sie passen sich der Form des Trägers auch in der zweiten, sich "verjüngenden" Zone an, so daß im Spulenband nach Verlassen der dritten Zone an beiden Längsseiten dieser Kunststoffdraht eingefügt ist. In einem weiteren Arbeitsgang kann dieser Kunststoffdraht zusammen mit den Windungen unter Wärmeeinwirkung z.B. mit Hilfe von Preßwalzen in seine endgültige flache Form gebracht werden.

Im folgenden soll die Erfindung anhand der Figur beispielhaft näher erläutert werden.

Fig. 1 zeigt eine Vorrichtung für die Erzeugung eines geraden Spulenbandes,

Fig. 2 zeigt einen Träger für die Erzeugung eines kreisförmigen Spulenbandes.

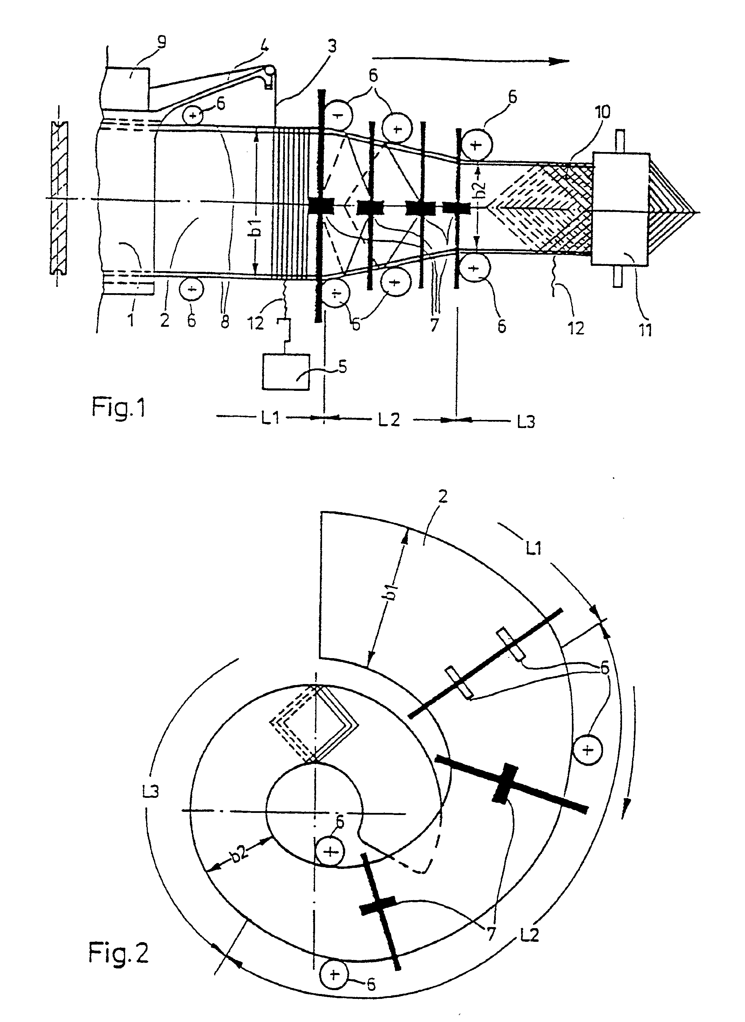

Fig. 1 zeigt eine Vorrichtung für die Erzeugung eines geraden Spulenbandes. Um einen Wickelkopf 1, der nur teilweise dargestellt ist, rotiert ein Wickelarm 4, der den Draht 3 für das Spulenband in gestreckten Windungen um den Träger 2, der Teil der Vorrichtung ist, herumwickelt. Der Draht 3 wird dem Wickelarm 4 aus einer Vorratsspule 9 zugeführt. Der Träger 2 hat im Bereich der Wickelzone L1 die größere erste Breite b1. Die Schnittdarstellung des Trägers im Wickelbereich L1 zeigt die Bandform des Trägers mit konkaven Nuten an den Schmalseiten.

In diesen Nuten liegt ein thermoplastischer Kunststoffdraht 8, der durch den Wickelkopf 1 hindurch der Vorrichtung zugeführt wird. Die Windungen der Spule liegen mit ihren Schmalseiten auf diesem Kunststoffdraht 8 auf. Das Spulenband kann an seinen Kanten bereits in der Zone L1 erwärmt werden, sodaß es sich schon teilweise mit dem Kunststoffdraht verbindet, wodurch ein Verschieben der Drähte in der Zug- oder Schiebezone L2 verhindert wird. Durch Transportmittel 6, die auf der Schmalseite, aber auch auf der breiten Seite des Trägers 2 angreifen können, wird sowohl der Kunststoffdraht als auch die sich darauf befindlichen Windungen in Pfeilrichtung über den Träger 2 weitergeschoben.

Nach Verlassen der Wickelzone L1 nimmt die größere Breite des Träger 2 ab. In dieser mit L2 bezeichneten Zone sind neben den Transportmitteln 6 Verschiebeeinrichtungen 7 vorgesehen, die z.B. als Reibrollen mit unterschiedlichen Reibmomenten arbeiten und vorzugsweise in der Mitte der gestreckten Windungen diese Windungen entsprechend der abnehmenden größeren Breite verformen. Durch die unterschiedlichen Reibmomente der Reibrollen, die zwischen den auf der hinteren nicht sichtbaren Seite des Trägers 2 und auf der Vorderseite auf die einzelnen Windungen der Spule ausgeübt werden, werden diese in Rautenform verzogen.

In einer dritten Zone L3 des Trägers mit der Breite b2 oder auch daran anschließend wird das Spulenband 10 durch Walzen 11 gepreßt. Es kann geteilt und auch z.B. durch Verbacken oder Verkleben der einzelnen Windungen verfestigt werden. Dabei wirken die im Spulenband befindlichen Kunststoffdrähte, die ebenfalls mit verformt werden, stabilisierend auf die endgültige Form der Spulen.

Erforderliche Anzapfungen 12 im Spulenband werden mit der Vorrichtung 5 geformt, indem diese Vorrichtung an vorgegebenen Stellen eine Windung mit größerem Umfang durch Vergrößerung der Wickelbreite b1 mit Hilfe eines Greifers der Vorrichtung bewirkt. Durch Verdrillen wird diese größere Windung wieder auf die Breite b1 der übrigen Windungen zurückgeführt.

Fig. 2 zeigt einen Träger 2 für die Erzeugung eines kreisförmigen Spulenbandes. Der kreisförmigen Wickelzone L1 mit der Breite b1 schließt sich die Zone L2 an, die in ihrer Breite spiralförmig auf die Breite b2 in der Zone L3 verringert wird. Wenn die Wicklung in radialer Richtung symmetrisch sein soll, muß auf der gesamten Länge des Trägers das Verhältnis der Umfangslinien zueinander konstant sein und dem Verhältnis des äußeren Radius des Trägers zum Inneren Radius in den Bereichen L1 und L3 entsprechen.

In der Zone 3 wird das Spulenband kreisringförmig mit etwa parallel zueinander verlaufenden Kanten geführt. Der Träger 2 muß nicht eben sein, sondern kann wie in der Figur dargestellt, zu einer Schraubenfläche gebogen sein. Ebenso wie in Fig. 1 erfolgt der Vorschub der Windungen durch Transportmittel 6, die auf die Schmalseite, aber auch auf die breiten Seiten von Träger 2 angreifen können. Das Wickelgut wird, wie schon in Fig. 1 beschrieben, in der Zone L2 durch Reibrollen 7 rautenförmig verzogen.

## Patentansprüche

1. Verfahren zum Herstellen eines flachen Spulenbandes aus isoliertem Draht (3), bei dem nebeneinanderliegende Windungen mittels eines Wickelkopfes (1) auf einen bandförmigen Wicklungsträger (2) in teilweiser Überdeckung mit benachbarten Windungen angeordnet sind, dadurch gekennzeichnet, daß der Draht (3) in einer Wickelzone L1 in gestreckten Windungen mit einer größeren ersten Breite b1 gewickelt wird, und die Windungen kontinuierlich oder periodisch durch Transportmittel (6) aus der Wickelzone L1 über eine zweite Zone L2 mit abnehmender größerer Breite in eine dritte Zone L3 mit einer Breite b2 transportiert werden, wobei durch weitere Mittel die Windungen während des Transportes in der Zone L2 durch Verformung etwa in Rautenform auseinandergezogen werden.

2. Verfahren nach Anspruch 1, dadurch gekennzeichnet, daß für eine Anzapfung oder für eine Trennung des Spulenbandes eine gestreckte Windung mit einer Breite gewickelt wird, die größer als die Breite b1 ist.

3. Verfahren nach Anspruch 2, dadurch gekennzeichnet, daß bei einer Anzapfung der Draht der größeren Windung soweit verdrillt wird, daß die gestreckte Windung die Breite b1 annimmt.

4. Verfahren nach Anspruch 1, dadurch gekennzeichnet, daß nach einer vorgegeben Anzahl von Windungen periodisch eine Wickelpause vorgesehen ist.

5. Verfahren nach einem der Ansprüche 1 bis 5, dadurch gekennzeichnet, daß nach einer Anzapfung der Wickelsinn umkehrbar ist.

6. Verfahren nach einem der Ansprüche 1 bis 5, dadurch gekennzeichnet, daß das Spulenband in der Zone L3 oder nach Verlassen der Zone L3 getrennt, gepreßt und unter Wärmeeinwirkung versteift wird, wobei die Trennung im Bereich einer Anzapfung oder einer Wickelpause erfolgt.

7. Verfahren nach einem der Ansprüche 1 bis 6, dadurch gekennzeichnet, daß in die Längskanten des Spulenbandes ein Kunststoffdraht (8) eingelegt ist.

8. Verfahren nach Anspruch 7, dadurch gekennzeichnet, daß der Kunststoffdraht (8) thermoplastisch ist und sich mit den Windungsdrähten unter Wärmeeinwirkung verbindet und dadurch die Festigkeit des Spulenbandes erhöht.

9. Verfahren nach einem der Ansprüche 1 bis 7, dadurch gekennzeichnet, daß zwei oder mehrere Drähte parallel gewickelt werden, wobei bei einer Anzapfung zyklisch wechselnd nur ein Draht abgespannt wird.

10. Vorrichtung zum Durchführen des Verfahrens nach Anspruch 1, mit einem bandförmigen Wicklungsträger (2), auf dessen Anfangsbreite b1 der Draht mit einem Wickelkopf (1) aufgewickelt wird; gekennzeichnet :

a. durch Verschiebemittel (6), durch die die Windungen aus der Wickelzone L1 des Trägers über eine zweite Zone L2 mit abnehmender größerer Breite in eine dritte Zone L3 mit der größeren Breite b2 des Trägers verechoben werden,

b. durch Mittel (7), mit denen die Windungen während des Transportes in der Zone L2 rautenförmig auseinandergezogen werden.

11. Vorrichtung nach Anspruch 10, dadurch gekennzeichnet, daß der Träger (2) auf seinen Schmalseiten Nuten aufweist, in welchen Kunststoffdrähte (8) verlaufen, die mit dem Wicklungsdraht (3) umschlungen werden, mit dem Spulenband weitertransportiert werden und als Versteifung in den beiden Kanten des Spulenbandes verbleiben.

12. Vorrichtung nach Anspruch 10 oder Anspruch 11, dadurch gekennzeichnet, daß die Mittel (7) zum Auseinanderziehen der Windungen in der Zone L2 aus Reibrollen mit unterschiedlichen Reibmomenten und / oder Umfangsgeschwindigkeiten bestehen.

13. Vorrichtung nach einem der Ansprüche 10 bis 12, dadurch gekennzeichnet, daß der Träger (2) in den Bereichen mit Breite b1 und b2 kreisringförmig ausgebildet ist, während der Bereich, in dem sich die Breite verringert, Spiralringform aufweist.

14. Vorrichtung nach Anspruch 13, dadurch gekennzeichnet, daß der Träger (2) die Form einer Schraubenfläche aufweist.

## Claims

1. A method of manufaturing a flat banded coil made of insulated wire (3), in which adjoining turns are arranged on a band-shaped winding support (2) with the aid of a winding head (1) partially covering adjacent turns, **characterised in that** the wire (3) is wound in a winding zone L1 in elongate turns with a larger first width b1 and the turns are transported continuously or periodically by transport means (6) out of the winding zone L1 via a second zone L2 with decreasing larger width into a third zone L3 with a width b2, in which the turns are drawn apart by deformation approximately into rhombus shape by further means during transport in the zone L2.

2. A method according to claim 1, **characterised in that** for a tapping or for separation of the banded coil an elongate turn is wound with a width which is greater than the width b1.

3. A method according to claim 2, **characterised in that** in a tapping the wire of the larger turn is twisted so far that the elongate turn takes on the width b1.

4. A method acording to claim 1, **characterised in that** after a predetermined number of turns a winding gap is periodically provided.

5. A method according to any one of the claims 1 to 5, **characterised in that** after a tapping the winding sense may be reversed.

6. A method according to any one of claims 1 to 5, **characterised in that** the banded coil is separated in the zone L3 or after leaving the zone L3, is pressed and stiffened under the action of heat, in which the separation takes place in the area of a tapping or a winding gap.

7. A method according to any one of claims 1 to 6, **characterised in that** a plastics wire (8) is placed into the longitudinal edges of the banded coil.

8. A method according to claim 7 **characterised in that** the plastics wire (8) is thermoplastic and is connected with the turn wires under the action of heat and thus increases the strength of the banded coil.

9. A method according to any one of claims 1 to 7, **characterised in that** two or more wires are wound parallel, in which in a tapping only one wire is tapped off cyclically alternately.

10. A device for carrying out the method according to claim 1, with a band-shaped winding support (2), on the starting width b1 of which the wire is wound with a winding head (1); **characterised**

a. by displacement means (6) by which the turns are displaced out of the winding zone L1 of the support via a second zone L2 with decreasing larger width into a third zone L3 with the larger width b2 of the support,

b. by means (7) with which the turns are drawn apart in rhombus shape during the transport in the zone L2.

11. A device according to claim 10, **character-**

ised in that the support (2) has grooves on its narrow sides, in which there run plastics wires (8) around which is wound the winding wire (3), the plastics wires being further transported by the banded coil and remaining as a reinforcement in the two edges of the banded coil.

12. A device according to claim 10 or claim 11, **characterised in that** the means (7) for drawing the turns apart in the zone L2 consist of friction rolls with different friction moments and/or peripheral speeds.

13. A device according to any one of claims 10 to 12, **characterised in that** the support (2) is circular in the regions having the width b1 and b2, while the region in which the width is reduced has a spiral shape.

14. A device according to claim 13, **characterised in that** the support (2) has the shape of a helicoidal surface.

# Revendications

1. Procédé pour la fabrication d'une bande plate pour bobine en fil isolé (3) dans lequel des spires situées les unes à côté des autres sont placées à l'aide d'une tête d'enroulement (1) sur un support d'enroulement (2) en forme de bande en recouvrant partiellement les spires voisines, **caractérisé en ce** que le fil (3) est enroulé dans une zone d'enroulement L1 en spires étirées avec une première largeur plus grande b1 et les spires sont transportées en continu ou périodiquement par des organes de transport (6) de la zone d'enroulement L1 en passant par une seconde zone L2 avec une plus grande largeur décroissante à une troisième zone L3 avec une largeur L2, les spires étant étirées à peu près en forme de losange par déformation par d'autres organes pendant le transport dans la zone L2.

2. Procédé selon la revendication 1, **caractérisé en ce** qu'une spire étirée est enroulée avec une largeur supérieure à la largeur b1 pour une prise de réglage ou pour une séparation de la bande pour bobine.

3. Procédé selon la revendication 2, **caractérisé en ce**, pour une prise de réglage, le fil de la plus grande spire est tordu jusqu'à ce que la spire étirée ait la largeur b1.

4. Procédé selon la revendication 1, **caractérisé en ce** qu'une pause d'enroulement est prévue périodiquement après un nombre prédéterminé de spires.

5. Procédé selon l'une des revendications 1 à 4 **caractérisé en ce** que le sens d'enroulement peut être inversé après une prise de réglage.

6. Procédé selon l'une des revendications 1 à 5, **caractérisé en ce** que la bande pour bobine est séparée, pressée et consolidée par effet de la chaleur dans la zone L3 ou après avoir quitté la zone L3, la séparation étant réalisée dans la zone d'une prise de réglage ou d'une pause d'enroulement.

7. Procédé selon l'une des revendications 1 à 6, **caractérisé en ce** qu'un fil de matière plastique (8) est encastré dans les bords longitudinaux de la bande pour bobine.

8. Procédé selon la revendication 7, **caractérisé en ce** que le fil de matière plastique (8) est thermoplastique et se lie aux fils des spires par effet de la chaleur et augmente ainsi la solidité de la bande pour bobine.

9. Procédé selon l'une des revendications 1 à 7, **caractérisé en ce** que deux ou plusieurs fils sont enroulés en parallèle, seulement un fil étant tendu en alternance de manière cyclique pour une prise de réglage.

10. Dispositif pour réaliser le procédé selon la revendication 1, avec un support d'enroulement (2) en forme de bande, sur la largeur initiale b1 duquel le fil est enroulé avec une tête d'enroulement (1), caractérisé :

    a. par des moyens de translation (6) grâce auxquels les spires sont déplacées de la zone d'enroulement L1 du support sur une seconde zone L2 avec une plus grande largeur décroissante à une troisième zone L3 avec la plus grande largeur b2 du support,

    b. par des moyens (7) avec lesquels les spires sont étirées en forme de losange pendant le transport dans la zone L2.

11. Dispositif selon la revendication 10, **caractérisé en ce** que le support (2) présente des rainures sur ses petits côtés, dans lesquelles se trouvent des fils de matière plastique (8) qui sont entortillés avec le fil d'enroulement (3), transportés avec la bande pour bobine et qui restent comme consolidation dans les deux bords de la bande pour bobine.

12. Dispositif selon la revendication 10 ou 11, **caractérisé en ce** que les organes (7) pour étirer les spires dans la zone L2 sont constitués par des roues de friction avec différents moments de friction et/ou différentes vitesses circonférentielles.

13. Dispositif selon l'une des revendications 10 à 12, **caractérisé en ce** que le support (2) est configuré de forme circulaire dans les zones avec la largeur b1 et b2 tandis que la zone dans laquelle la largeur décroit présente une forme d'anneau hélicoïdal.

14. Dispositif selon la revendication 13, **caractérisé en ce** que le support (2) présente la forme d'une surface hélicoïdale.

**Fig.1**

**Fig.2**